Europäisches Patentamt

European Patent Office

Office européen des brevets

(19)

(11) Veröffentlichungsnummer : **0 207 277**
**B1**

(12) **EUROPÄISCHE PATENTSCHRIFT**

(45) Veröffentlichungstag der Patentschrift :
03.01.90

(21) Anmeldenummer : 86106989.6

(22) Anmeldetag : 22.05.86

(51) Int. Cl.⁵ : **B 01 D 53/26, B 60 P   3/24**

(54) Verfahren zur Behandlung von Klärgas, Deponiegas o. dgl.

(30) Priorität : 28.05.85 DE 3519129

(43) Veröffentlichungstag der Anmeldung :
07.01.87 Patentblatt 87/02

(45) Bekanntmachung des Hinweises auf die Patenterteilung : 03.01.90 Patentblatt 90/01

(84) Benannte Vertragsstaaten :
AT BE DE FR GB IT NL

(56) Entgegenhaltungen :
DE—B— 2 627 327
GB—A— 1 349 733
US—A— 3 479 043
THE OIL AND GAS JOURNAL, Band 72, Nr. 39, 30.
September 1974, Seiten 74-76,79; J.M. IOCCA: "Fuel
can be saved at compressors-part I"

(73) Patentinhaber : Altvater, Jakob
Ravensburger Strasse 6
D-7954 Bad Wurzach (DE)

(72) Erfinder : Altvater, Jakob
Ravensburger Strasse 6
D-7954 Bad Wurzach (DE)

(74) Vertreter : Patentanwälte Dipl.-Ing. E. Eisele Dr.-Ing.
H. Otten
Seestrasse 42
D-7980 Ravensburg (DE)

Jouve, 18, rue St-Denis, 75001 Paris, France

## Beschreibung

Die Erfindung betrifft ein Verfahren zur Behandlung von Biogas aus Kläranlagen nach dem Oberbegriff des Anspruchs 1.

In Kläranlagen entsteht bei der Vergärung von Faulschlamm Biogas oder Faulgas oder auch Klärgas genannt. Ebenso fallen Deponiegase in Mülledeponien in erheblichen Mengen an, die bislang nur unzureichend oder durch Abfackelung gar nicht genutzt wurden. Die Verwertung derartiger Biogase scheiterte bislang im wesentlichen an Transportproblemen, da aufwendige Rohrleitungen zum Verbraucher kostspielig sind und darüber hinaus nur in einem gewissen Umkreis wirtschaftlich genutzt werden können.

Klär- und Deponiegase — im weiteren « Biogase » genannt — ähneln in ihrer Zusammensetzung Erdgas, wobei der Anteil an Schwefelwasserstoff höher, der Anteil an Stickstoff niedriger ist als bei Erdgas.

Eine typische Biogaszusammensetzung (in %) kann beispielsweise wie folgt angegeben werden (z. B. Kläranlage Hamburg) :

|  | Bereich | | | Durchschnitt |
|---|---|---|---|---|
| $CH_4$ | 51,8 | – | 84,0 | 65,0 |
| $CO_2$ | 14,0 | – | 48,0 | 34,8 |
| $H_2S$ | 0,08 | – | 5,7 | 0,2 |
| $H_2$ | 0 | – | 5 | Spuren |
| $CO$ | 0 | – | 2,1 | Spuren |
| $N_2$ | 0,6 | – | 7,5 | Spuren |
| $O_2$ | 0 | – | 1 | Spuren |

Die Hauptbestandteile des Biogases sind demnach $CH_4$ (Methan), sowie $CO_2$ (Kohlendioxid).

Für die vorliegende Erfindung von Bedeutung ist die Anwesenheit von Schwefelwasserstoff ($H_2S$), da dieses in Anwesenheit von Luft und hohem Feuchtigkeitsgehalt fast alle Metalle mehr oder weniger stark angreift. Bei Transport von Biogas in Metallbehältern kann es demnach infolge des Schwefelwasserstoffes zu gefährlicher Spannungsrißkorrosion kommen.

Aus der Druckschrift WO-A-82/0 3374 ist bereits ein Transportfahrzeug bekannt geworden, welches langgestreckte zylindrische Tanks zum Transport von Flüssigkeiten aufweist. Die Anordnung von mehreren kleineren Behältern hat dabei den Vorteil, daß eine bessere Raumausnutzung gewährleistet ist. Die bekannte Einrichtung dient dabei zum Transport von Flüssigkeiten, wobei keine besonderen Anforderungen hinsichtlich des Drucks und Volumens des Mediums gestellt sind.

Aus der US-A-3 479 043 ist ein Transportsystem zum Transport von druckbeaufschlagten Gasen bekannt geworden. Um der Druckbeanspruchung zu begegnen, werden eine Vielzahl von länglichen Gasbehältern mit kleinem Durchmesser vorgeschlagen, die zur besseren Platzausnutzung im Querschnitt rechteckförmig angeordnet sind.

Die bekannten Transportsysteme geben keinen Hinweis darauf, in welcher Art und Weise das in Kläranlagen und Deponien anfallende Biogas wirtschaftlich verwertet werden kann.

Aus der Literaturstelle « Ullmanns Enzyklopädie der technischen Chemie », Band 10, 1975, S. 589 bis 590, ist ein Verfahren zur Behandlung von Erdgas bekannt geworden, das zur Trocknung die bekannten Absorptions- oder Adsorptionsverfahren vorsieht. Das Adsorptionsverfahren zur Erdgasaufbereitung wird insbesondere dann empfohlen, wenn die Trocknung mit einer Entfernung von $CO_2$ oder $H_2S$ kombiniert wird oder wenn extrem niedrige Taupunkte gefordert werden. Dies ist insbesondere dann von Interesse, wenn eine Zerlegung bzw. eine Verflüssigung des Erdgases in Betracht kommt. Weiterhin ist in der Literaturstelle « Lueger, Lexikon der Technik », Band 4, 1962, S. 177, hierzu angegeben, daß der Erdgastransport in verflüssigter Form auf Schiffen, Fahrzeugen oder mit der Eisenbahn erfolgen kann. Darüber hinaus erfolgt der Erdgastransport in nicht verflüssigter Form in druckfesten und korrosionsbeständigen Rohrleitungen.

Nachteilig an diesen Verfahren ist der große technische Aufwand, der für die Verflüssigung von Erdgas benötigt wird. Eine solche technisch aufwendige Anlage wäre für die Anwendung zur Behandlung der Biogase in Kläranlagen wirtschaftlich nicht vertretbar. Die Verflüssigung in Großanlagen bei Drücken weit oberhalb von 30 bar erfordert jedoch auch einen hohen Materialaufwand und bringt Korrosionsprobleme mit sich. Insbesondere führen Restanteile von Schwefelwasserstoff zur Schwefelsäure und damit zu Spannungsrißkorrosion.

Der Erfindung liegt die Aufgabe zugrunde, ein Verfahren zur Behandlung von Biogas aus Kläranlagen, Mülldeponien o. dgl. vorzuschlagen, welches eine wirtschaftliche Verwertung und Behandlung von Biogas aus diesem Gebiet erlaubt.

Diese Aufgabe wird ausgehend von einem Verfahren der einleitend bezeichnenden Art erfindungsgemäß durch die kennzeichnenden Merkmale des Verfahrensanspruchs gelöst.

Der Erfindung liegt die Erkenntnis zugrunde, daß das zu behandelnde Biogas an sich einen niedrigeren Heizwert aufweist, als beispielsweise Erdgas. Es erhebt sich deshalb die dringende Frage der Wirtschaftlichkeit der Behandlung und des Transports dieses bislang meist ungenutzt gebliebenen Gases. So enthält beispielsweise Biogas mit 50 % Methangasanteil einen nutzbaren Energieinhalt von ca. 20 MJ/Nm$^3$. Biogas mit nur 25 % Methangasanteil enthält demzufolge einen Energieinhalt von nur ca. 10 MJ/Nm$^3$ bei einer Dichte von 1,2 kg/Nm$^3$.

Gemäß der vorliegenden Erfindung läßt sich demnach eine wirtschaftliche Verwertung des auf Kläranlagen oder Deponien anfallenden Biogases nur dann erzielen, wenn folgende Voraussetzungen gegeben sind :

Erfassung und Transport großer Biogasmengen da Heizwert proportional der Menge ist ;
Kostengünstiges Transportmittel zum Transport maximal möglicher Mengen ;
Sicherung des Transportmittels gegen Beschädigungen.

Die vorstehenden Bedingungen führen in der Praxis dazu, daß der Transport über Rohrleitungen für Biogas in der Regel ausscheidet, da die Transportkosten für längere Wege im Verhältnis zur anfallenden Menge zu hoch sind.

Um einen möglichst flexiblen Transport zu jedem beliebigen Verbraucher zu ermöglichen, empfiehlt sich ein Straßentransport. Dieser Transport muß jedoch bezüglich der transportierten Menge dahingehend optimiert werden, daß auf dem maximal zulässigen Transportraum die maximal zulässige Menge transportiert wird, wobei die technischen Gegebenheiten des Mediums zu berücksichtigen sind. Diese Überlegungen führen dazu, daß große Mengen nur mittels starker Verdichtung des Biogases transportiert werden können. Die Verdichtung erfolgt deshalb erfindungsgemäß auf einen Druck von ca. 30 bar. Eine noch höhere Verdichtung des Biogases erscheint unzweckmäßig zu sein, da zum einen der Materialaufwand bzw. die technischen Anforderungen an das Material des Transportmittels zu unwirtschaftlichen Ergebnissen führen würde. Zum anderen treten oberhalb derartiger Drücke Verflüssigungen des gasförmigen Mediums auf, was zu zusätzlicher Korrosionsbelastung führen kann. ($K_{krit}$ (CH$_4$) $\approx$ 46 bar).

Durch den vorhandenen Schwefelwasserstoff im Biogas ist es erfindungsgemäß erforderlich, daß das Gas einer Trocknungsanlage zugeführt wird, um die Feuchtigkeit möglichst vollständig zu entziehen. Der Schwefelwasserstoff kann sich deshalb nicht in gefährliche Schwefelsäure durch die Verbindung mit Wasser bilden, so daß insbesondere eine Spannungsrißkorrosion vermieden wird.

Gemäß der Erfindung ist demnach die richtige Vorbehandlung des Biogases durch Trocknung und Druckbeaufschlagung maßgeblich. Sodann wird das Biogas in einem Transportfahrzeug transportiert, welches die für den Straßenverkehr maximal zulässigen Abmaße bei maximal zulässigem Gesamtgewicht aufweist. Beim Verbraucher erfolgt eine Entspannung des komprimierten Biogases auf nahezu Normaldruck, bevor das Gas einem Verbraucher zugeführt wird. Dabei ist es erfindungsgemäß maßgeblich, daß die Gasbehälter gleichzeitig als Lager vor Ort beim Verbraucher dienen können, so daß sich wahlweise eine Umlagerung in Extratanks erübrigt. Dies wird erfindungsgemäß durch den Sattelanhänger bewirkt.

Im Hinblick auf das Transportfahrzeug ist es maßgeblich, daß die Gasbehälter zum einen eine Druckbelastbarkeit von 30 bar aufweisen und andererseits dem zu transportierenden Medium hinsichtlich Korrosion widerstehen. Hierfür sind die Gasbehälter aus Feinkornbaustahl hergestellt und nach der Fertigung, d. h. nach dem Schweißen spannungsarm geglüht.

Durch die in den Unteransprüchen aufgeführten Maßnahmen sind vorteilhafte Weiterbildungen und Verbesserungen des erfindungsgemäßen Gedankens möglich.

Gemäß der Weiterbildung der Erfindung nach den Unteransprüchen erfolgt eine optimale Trocknung des Biosgases sowie eine wirtschaftliche Verdichtung des Gases wobei der Verdichter unmittelbar mit Biogas selbst angetrieben wird.

Vorteilhaft ist weiterhin, daß die Entspannungseinrichtung auf ca. 0,8 bar entspannt.

Das für das erfindungsgemäße Verfahren zu verwendende Transportfahrzeug weist verschiedene Behälterformen auf. Die äußeren Abmaße des Transportfahrzeugs sind durch die Zulässigkeitsbestimmungen im Straßenverkehr vorgegeben. So darf ein Sattelzug die Breite von 2,5 m und die von der Straßenoberfläche gemessene Höhe von 4,20 m sowie eine Gesamtlänge des Zuges von 16 m nicht überschreiten. Durch die vorgegebene Breite und Höhe des Transportraumes sind Grenzen an die Abmessungen der Transportbehälter gegeben. Würde man nur einen kreiszylindrischen Transportbehälter wählen, so wären die Eckbereiche des zulässigen rechteckigen Laderaums nicht genutzt. Höchste Volumenausnützung sowie höchste Drücke können deshalb mit einer Vielzahl von Gasbehältern mit kleinem Querschnittsdurchmesser bewerkstelligt werden.

Sicherheitsbestimmungen können es zur Auflage machen, daß die Gasbehälter zur Kontrolle begehbar sein müssen. Hierfür ist es zweckmäßig, daß die Gasbehälter einen Mindestdurchmesser aufweisen, um ein Mannloch installieren zu können.

Verwendet man Gasbehälter mit größerem Durchmesser so ist es ebenfalls ratsam, diese möglichst derart anzuordnen, daß ein rechteckig gedachter Laderaum voll genutzt ist. Dabei ist es von Vorteil, wenn der Raum zwischen den Achsen des Transportfahrzeugs derart genutzt wird, daß in diesem Bereich ein einzelner Gasbehälter, darüber jedoch je zwei nebeneinander angeordnete Gasbehälter installiert sind. Hierdurch kann sowohl der untere engere Raum zwischen den Tranportachsen und der darüberliegende rechteckige oder quadratische Bereich ausgenutzt werden.

Die Verwendung mehrerer kleinerer Gasbehälter gegenüber einem einzigen großen Gasbehälter hat demnach sowohl eine optimale Raumausnutzung als auch eine Verminderung der notwendigen Wandstärken bei gleichen Druckverhältnissen im Inneren der Gasbehälter zur Folge.

Durch die Anordnung von Einzelbehältern kann demnach das Volumen eines großen zylindrischen Behälters erheblich vergrößert werden.

Bei einem erreichbaren Volumen von ca. 80 m³ wird bei Komprimierung dieses Gases auf ca. 30 bar ein Gasvolumen von ca. 2 500 m³ zum Transport aufgenommen. Bei Klärgas mit der eingangs erwähnten Zusammensetzung entspricht dies einem Energieinhalt von 15 bis 16 MWatt.

Das erfindungsgemäße Verfahren wird zweckmäßigerweise mit einem Transportfahrzeug der nachfolgend anhand der Zeichnungen beschriebenen Art betrieben. Es zeigen

Fig. 1 eine Seitenansicht eines Transportzuges als Sattelschlepper mit Sattelanhänger,
Fig. 2 einen Querschnitt durch das Transportfahrzeug nach Fig. 1 entlang der Schnittlinie I-I,
Fig. 3 ein weiteres Transportfahrzeug mit im Querschnitt kleineren Gasbehältern, bestehend aus Zugfahrzeug mit Anhänger und
Fig. 4 einen Querschnitt durch das Transportfahrzeug nach Fig. 3 entlang der Schnittlinie III-III.

Das in Kläranlagen oder Deponien anfallende Biogas weist eine Zusammensetzung auf, wie sie in der Beschreibungseinleitung tabellarisch aufgeführt wurde. Infolge des enthaltenen Schwefelwasserstoffes $H_2S$ ist es erforderlich, daß das Biogas einer Trocknungsanlage zugeführt wird, um dem Gas die Feuchtigkeit und damit den Wassergehalt zu entziehen damit sich keine schädliche Schwefelsäure bilden kann. Eine geeignete Trocknungsanlage wird beispielsweise von der Firma Silica Ges. mbH, Berlin unter der Anlagentypennummer TA-TT/EA2K2U-2S-IV-40 angeboten. Diese Trocknungsanlage hat einen Durchsatz von 830 $m^3_n$/h bei einer Zusammensetzung des Biogases von ca. 59-69 % $CH_4$ und 29-39 % $CO_2$. Die mit dieser Anlage erzielbare Restfeuchte liegt bei minus 25 °C bezogen auf 30 bar unter dem Taupunkt. Die Trocknungsanlage weist dabei zwei Adsorber mit einer K-Trockenperlen-Füllung auf.

Der zur Trocknungsanlage zugehörige Verdichter für das Biogas besteht aus einem Drei-Stufen-Verdichter mit dem genannten Durchsatz von ca. 830 m³ pro Stunde. Der Verdichter wird von einem Verbrennungsmotor angetrieben, der ca. 8 % des zu verdichtenden Biogases als Antriebsenergie verbraucht.

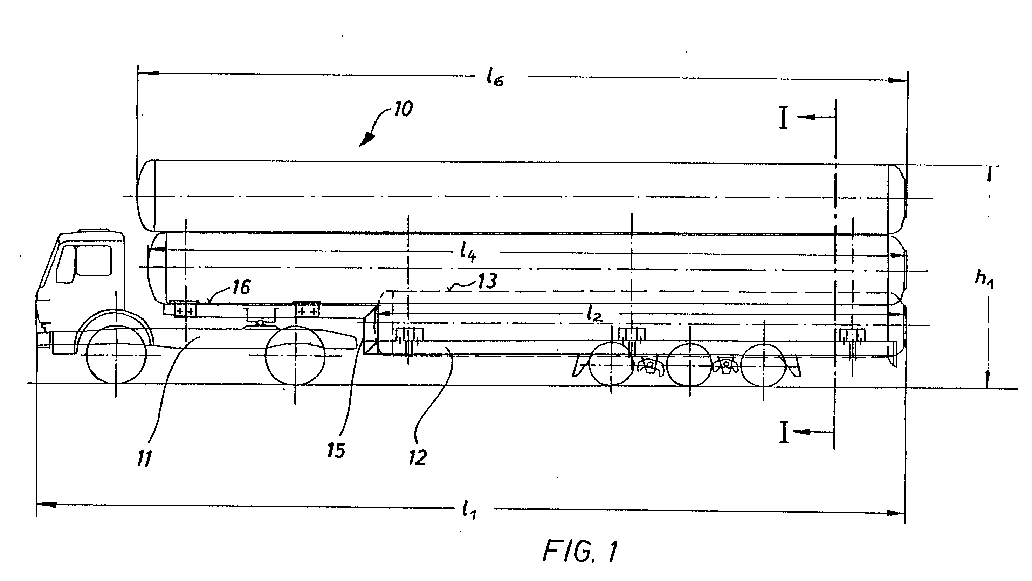

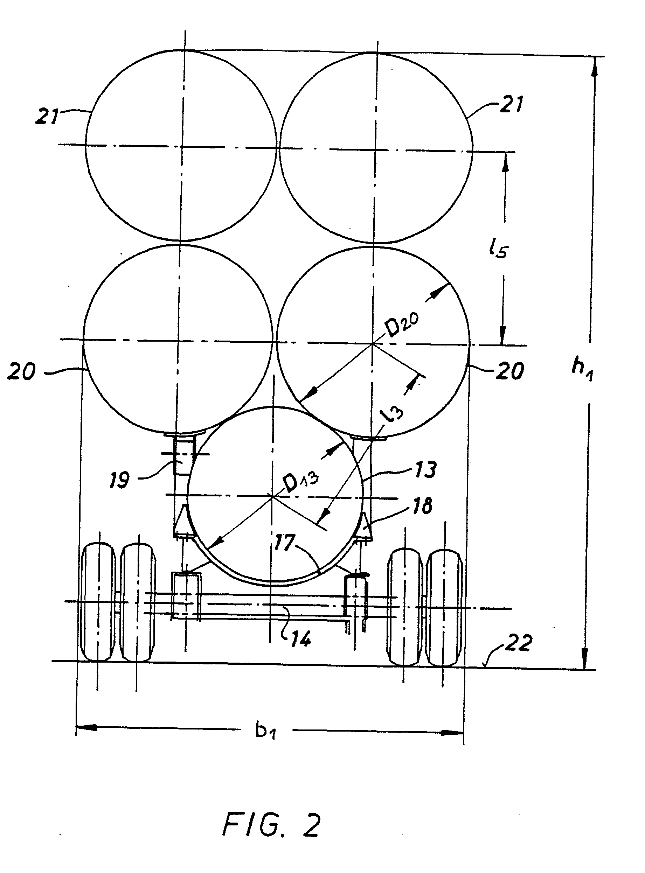

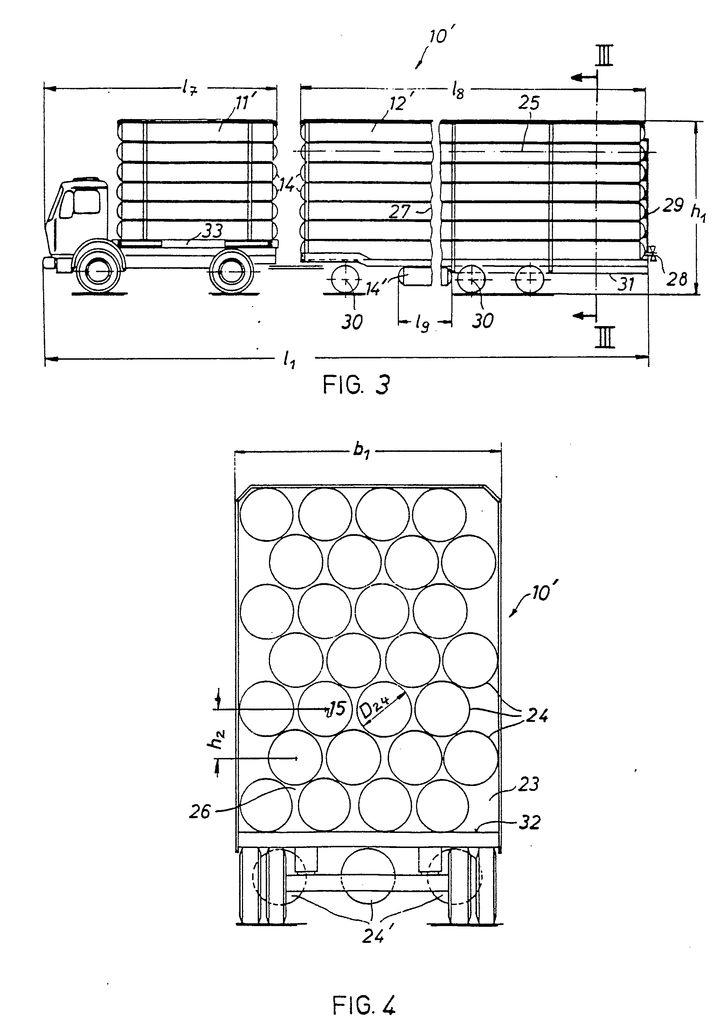

Das derart an der Kläranlage oder der Deponie vorbehandelte Biogas wird sodann dem Transportfahrzeug gemäß Fig. 1 oder 3 zugeführt. Das in Fig. 1 in Seitenansicht sowie Fig. 2 im Querschnitt dargestellte Transportfahrzeug (10) ist als Straßenfahrzeug ausgebildet. Das Zugfahrzeug (11) ist als Sattelschlepper der Anhänger (12) als Sattelanhänger ausgebildet.

Die äußeren Abmaße des Transportzuges sind derart bemessen, daß die für den Straßenverkehr maximal zulässigen Werte möglichst erzielt werden, um ein Maximum an Transportvolumen und damit die notwendige Wirtschaftlichkeit zu erzielen. So werden folgende Werte angestrebt :

Gesamtlänge des Transportzuges $l_1 \approx 16$ m
Gesamthöhe von Straßenoberfläche gemessen $h_1 \approx 4,20$ m
Gesamtbreite des Transportzuges $b_1 \approx 2,50$ m.

Wie in Fig. 1 und 2 dargestellt, ist der untere Gasbehälter (13) möglichst tief zwischen den Achsen (14) des Sattelanhängers angeordnet. Die Länge $l_2$ dieses unteren Gasbehälters (13) reicht bis zum Absatz (15) des Sattelanhängers (12) zur Bildung der Auflageplattform (16) auf den Sattelschlepper (11). Die Länge $l_2$ beträgt beispielsweise $l_2 \approx 9,5$ m. Als Durchmesser des Gasbehälters (13) wird gewählt $D_{13} \approx 1,15$ m.

Durch die Anordnung sowie die gewählte Größe des unteren Gasbehälters (13) wird der Raum zwischen den Achsen des Sattelschleppers sowie die hinter dem Absatz (15) vorhandene Restlänge optimal genützt.

Der Gasbehälter (13) ist in einer schalenförmigen Stützvorrichtung (17) mit seitlichen Halterungen (18) gelagert.

Über eine weitere Stützvorrichtung (19) sind oberhalb des unteren Gasbehälters (13) zwei weitere, nebeneinander liegende Gasbehälter (20) mit einem gewählten Durchmesser $D_{20} \approx 1,26$ m angeordnet. Der Achsabstand zwischen den Mittelpunkten der Gasbehälter (13, 20) beträgt $l_3 \approx 1,215$ m. Die Länge $l_4$ der Gasbehälter (20) erstreckt sich über die gesamte Länge des Sattelanhängers (12) und beträgt $l_4 \approx 13,6$ m.

Oberhalb dieser beiden Gasbehälter (20) sind in einem Achsabstand von $l_5 \approx 1,28$ m zwei weitere nebeneinander liegende Gasbehälter (21) angeordnet, die den gleichen Durchmesser aufweisen, wie die Gasbehälter (20). Die nebeneinander liegenden Gasbehälter (20 bzw. 21) bilden die gesamtzulässige Breite $b_1$ des Transportfahrzeugs. Die von der Straßenoberfläche (22) gemessene Gesamthöhe $h_1$ liegt im Bereich der zulässigen maximalen Höhe im Straßenverkehr, d. h. $h_1 \leq 4,2$ m.

Wie in Fig. 1 weiterhin dargestellt, sind die oberen Gasbehälter (21) etwas länger ausgebildet als die darunter liegenden Gasbehälter (20). Die Länge $l_6$ beträgt $l_6$ 13,8 m. Hierdurch kann der Raum oberhalb bzw. hinter dem Zugfahrzeug (11) noch besser genutzt werden. Die Wahl von Gasbehältern (13, 20, 21) mit relativ großem Durchmesser hat zwar den Nachteil, daß Zwischenräume im darum liegenden rechteckigen Laderaum ungenutzt bleiben, so daß das Transportvolumen auf etwa $V \approx 78$ m³ beschränkt ist. Der große Durchmesser ermöglicht jedoch die Begehbarkeit der Gasbehälter zur Kontrolle der vorhandenen Schweißkonstruktionen.

Die Gasbehälter (13, 20, 21) sind in geschweißter Konstruktion aus Feinkornbaustählen gefertigt. Folgende Feinkornbaustähle werden verwendet: St E 355 nach VdTÜV-Werkstoffblatt 354 und/oder St E 380 nach VdTÜV-Werkstoffblatt 355. Die Wandstärke der Gasbehälter (13, 20, 21) beträgt etwa 5 mm.

Nach Fertigstellung der Fahrzeugtanks, d. h. nach Beendigung aller Schweißungen, werden die Tanks werkstoffgerecht bei ca. 500 °C spannungsarm geglüht.

Auf dem Fahrzeug aufgebaut, sind die Behälterräume unabsperrbar miteinander verbunden, so daß für die gesamte Tankbatterie nur ein Anschluß, der gleichzeitig zur Füllung und Entleerung dient, vorgesehen wird.

Aus wirtschaftlichen Erwägungen wird ein Tankvolumen in der Größenordnung von ca. 80 m³ angestrebt. Um jedoch das zulässige Gesamtgewicht des Fahrzeugs, d. h. des Gesamtgewichts von Zugmaschine (11) plus Sattelanhänger (12) plus Behälter (13, 20, 21) plus Beförderungsgut (Biogas) von 40 000 kg nicht zu überschreiten, wird ein Behältervolumen von ca. 75 bis 78 m³ gewählt.

In den Figuren 3 und 4 ist eine alternative Ausführungsform für ein Transportfahrzeug dargestellt. Generell wird mit diesem alternativen Transportfahrzeug der Grundgedanke verbunden, daß die Wahl einer Vielzahl von Gasbehältern mit kleinerem Durchmesser eine optimale Raumausnützung ergibt. Weiterhin kann die Behälterwandstärke bei gleichem Druck geringer ausgeführt werden, so daß insgesamt keine Gewichtserhöhung vorhanden ist.

Das in den Figuren 3 und 4 in Seitenansicht sowie im Querschnitt dargestellte Transportfahrzeug (10') besteht ebenfalls aus einem Zugfahrzeug (11') mit einem Anhänger (12'), der jedoch nicht als Sattelanhänger ausgebildet ist. Das Zugfahrzeug (11') ist selbst als Transportfahrzeug für Gasbehälter ausgebildet und im Querschnitt prinzipiell gleich aufgebaut wie der Anhänger (12'). Der Zugwagen (11') hat eine Gesamtlänge von $l_7 \approx 4,0$ m, der Anhänger (12') eine Aufbaulänge von $l_8 \approx 12$ m. Die Höhe $h_1$ des Transportfahrzeugs beträgt vom Straßenrand ebenfalls ca. $h_1 \approx 4,2$ m. Die Breite beträgt $b_1 \approx 2,5$ m. Damit ist die für Straßenfahrzeuge maximale Transportladefläche ebenfalls in etwa ausgenutzt.

Wie aus Fig. 3 und 4 ersichtlich, weist das Transportfahrzeug (10') einen im Querschnitt nahezu rechteckförmigen Laderaum (23) auf, der mit stationär angeordneten einzelnen kleineren Gasbehältern (24) gefüllt ist. Die mit horizontaler Längsachse (25) gelagerten zylindrischen Gasbehälter weisen einen Durchmesser von $D_{24} \approx 49,3$ cm auf. Im Laderaum (23) sind vier derartige Gasbehälter (24) nebeneinander und in den hierdurch gebildeten Einschnitten (26) sieben Schichten übereinander gelagert, so daß sich insgesamt achtundzwanzig Gasbehälter (24) im Laderaum (23) befinden. Durch diesen Aufbau kann der rechteckförmige Laderaum nahezu vollständig ausgenutzt werden, dies insbesondere im Vergleich zu einem einzelnen kreiszylindrischen Großbehälter entsprechend herkömmlichen Tanklastzügen.

Wie in Fig. 3 ersichtlich, erstrecken sich die Behälter (24) über die gesamte Nutzlänge des Zugfahrzeugs (11') bzw. des Anhängers (12'). Der Anhänger (12') ist in der Fig. 1 mit Schnittlinie (27) verkürzt dargestellt.

Die Gasbehälter (24) sind auf dem jeweiligen Fahrzeug (Zugfahrzeug 11' oder Anhänger 12') untereinander kommunizierend verbunden, wodurch die Füllung bzw. die Entnahme des Gases über einen gemeinsamen Füllstutzen (18) durchführbar ist. Die kommunizierende Verbindungsleitung ist in Fig. 3 schematisch mit (29) beim Anhänger (12') dargestellt.

Unter dem Laderaum (23) befinden sich drei weitere Gasbehälter (24'), die vorzugsweise zwischen den Achsen (30) des Zugfahrzeugs (11') und/oder des Anhängers (12') angeordnet sind. Bei dem in Fig. 3 dargestellten zusätzlichen Gasbehälter (24') handelt es sich um eine weitere Vergrößerung des Füllvolumens mit Biogas. Eine zusätzliche Leitung (31) verbindet die unteren Gasbehälter (24') mit den oberen Gasbehältern (24). Die Länge der zusätzlichen Gasbehälter (24') beträgt im Ausführungsbeispiel $l_9 \approx 5$ m. Hiervon sind drei nebeneinander unterhalb des Laderaums (23) angeordnet, wie in Fig. 4 dargestellt.

Der senkrechte Abstand $h_2$ zweier Querschnittsmittelpunkte (Längsmittelachse 25) beträgt $h_2 \approx 46$ cm.

Das Zugfahrzeug (11') ist mit einem Wechselrahmen (33) ausgerüstet, so daß der Aufbau leicht entnommen werden kann und der Motorwagen ähnlich dem Sattelschlepper (11) in Fig. 1 zur Verfügung steht.

## Patentansprüche

1. Verfahren zur Behandlung von Biogas aus Kläranlagen oder Deponien enthaltend ca. 51,8 bis 84 % $CH_4$ und 14 bis 48 % $CO_2$ sowie 0,08 bis 5,7 % $H_2S$, dadurch gekennzeichnet, daß der Wassergehalt des Biogases in einer Adsorptionstrocknungsanlage soweit reduziert wird, daß die Restfeuchte bei einem

5

Druck von ca. 30 bar und einer Temperatur von minus 25 °C unter dem Taupunkt liegt, daß anschließend in einem Mehrstufenverdichter das Biogas auf diesen Druck von ca. 30 bar verdichtet, danach in einer Menge von ca. 70 bis 80 m³ einem LKW-Tanklastzug zum Transport zugeführt und beim Verbraucher in einer Entspannungseinrichtung entspannt wird.

2. Verfahren nach Anspruch 1, dadurch gekennzeichnet, daß in einem Drei-Stufen-Verdichter ca. 830 Nm³/h Biogas verdichtet werden, wobei ca. 8 % des zu verdichtenden Gases als Verdichter-Antriebsgas verwendet wird.

3. Verfahren nach einem der Ansprüche 1 und 2, dadurch gekennzeichnet, daß die Entspannungseinrichtung auf ca. 0,8 bar entspannt.

## Claims

1. Process for the treatment of biogas, containing approx. 51.8 to 84 % of $CH_4$ and 14 to 48 % of $CO_2$ as well as 0.08 to 5.7 % of $H_2O$, from sewage plants or refuse dumps, characterized in that the water content of the biogas is reduced in an adsorption drying plant to the extent that, at a pressure of approx. 30 bar and a temperature of minus 25 °C, the residual moisture is below the dew point, that the biogas is subsequently compressed in a multistage compressor to this pressure of approx. 30 bar, is then fed in a quantity of approx. 70 to 80 m³ to an HGV tanker trailer for transporting, and is expanded in an expanding unit at the consumer's premises.

2. Process according to Claim 1, characterized in that approx. 830 Nm³/h of biogas are compressed in a three-stage compressor, approx. 8 % of the gas to be compressed being used as compressor drive gas.

3. Process according to one of Claims 1 and 2, characterized in that the expansion unit expands to approx. 0.8 bar.

## Revendications

1. Procédé pour le traitement de biogaz provenant d'installations d'épuration ou de décharges de déchets, comportant environ 51,8 à 84 % de $CH_4$ et 14 à 48 % de $CO_2$, ainsi que 0,08 à 5,7 % de $H_2S$, caractérisé en ce que la teneur en eau du biogaz est réduite dans une installation de séchage par adsorption, de sorte que l'humidité résiduelle, pour une pression d'environ 30 bars et une température de — 25 °C, se trouve sous le point de rosée, en ce que, ensuite, le biogaz est comprimé à cette pression d'environ 30 bars dans un compresseur à plusieurs étages, puis est amené, en une quantité d'environ 70 à 80 m³, à un camion-citerne pour son transport et détendu chez l'utilisateur dans une installation de détente.

2. Procédé selon la revendication 1, caractérisé en ce qu'environ 830 Nm³/h de biogaz sont comprimés dans un compresseur à trois étages, environ 8 % du gaz à comprimer étant utilisés comme gaz moteur pour le compresseur.

3. Procédé selon une des revendications 1 et 2, caractérisé en ce que l'installation de détente détend à environ 0,8 bar.

FIG. 1

EP 0 207 277 B1

FIG. 2

FIG. 3

FIG. 4